# EUROPEAN PATENT SPECIFICATION

(11) **EP 3 045 939 B1**
(45) Date of publication and mention of the grant of the patent: **27.03.2019**
(21) Application number: 14843459.0
(22) Date of filing: 09.09.2014
(51) Int. Cl.: G02B 1/10, B32B 9/00

(54) **OPTICAL ELEMENT**
OPTISCHES ELEMENT
ÉLÉMENT OPTIQUE

(30) Priority: 12.09.2013 JP 2013189814
(43) Date of publication of application: 20.07.2016
(73) Proprietor: Zeon Corporation, Tokyo 100-8246 (JP)
(72) Inventor: FUJII Kensaku, Chiyoda-ku, Tokyo 100-8246 (JP)
(74) Representative: Maiwald Patent- und Rechtsanwaltsgesellschaft mbH
(86) International application number: PCT/JP2014/073812
(87) International publication number: WO 2015/037585

(56) References cited:
- EP-A1- 2 620 274
- WO-A1-2008/149631
- JP-A- 2005 169 994
- JP-A- 2005 169 994
- JP-A- 2005 178 087
- JP-A- 2005 178 087
- JP-A- 2009 024 253
- JP-A- 2009 024 253
- US-A1- 2012 295 120

## Description

### TECHNICAL FIELD

The present invention relates to an optical element that is provided to a vehicle, or used in outdoor application, and exhibits excellent heat resistance and an excellent gas barrier capability.

### BACKGROUND ART

An optical part that is provided with an advanced function as a result of forming a multilayer film on the surface of a resin formed article by stacking a number of optical thin films (e.g., metal reflective film, antireflective film, transparent conductive film, and wavelength-selective transmission film) has been widely used. When such an optical part is subjected to a high-temperature environment (e.g., when provided to a vehicle, or installed outdoors) in a state in which the adhesion between the resin formed article and the multilayer film is insufficient, microcracks may occur in the multilayer film, or the multilayer film may be separated from the resin formed article due to the difference in coefficient of thermal expansion between the multilayer film and the resin formed article.

A vacuum deposition (evaporation) method that can form a uniform film is generally used to form an optical thin film on the surface of a resin formed article. However, an optical thin film that is formed using the vacuum deposition method tends to exhibit insufficient adhesion to a resin formed article.

Therefore, a method that forms an optical thin film on the surface of a resin formed article using a sputtering method has been proposed (see Patent Literature 1). Also a CVD method has been proposed for providing a plastic optical device which has a silicon oxide film exhibiting gas barrier performance which is less deteriorated even when used under a high temperature environment (Patent Literature 2).

### CITATION LIST

### PATENT LITERATURE

Patent Literature 1: JP-A-2002-331613
Patent Literature 2: WO 2008/149631 A1

### SUMMARY OF INVENTION

### TECHNICAL PROBLEM

The inventors of the invention conducted extensive studies in order to obtain an optical element that utilizes an alicyclic structure-containing polymer that exhibits excellent shape stability and excellent transparency even in a high-temperature environment. As a result, the inventors found that a laminate (optical element) that is produced by forming a silicon oxide film having a film density equal to or higher than a specific value on the surface of a resin formed article formed of an alicyclic structure-containing polymer, yellows to only a small extent in a high-temperature environment, and exhibits an excellent gas barrier capability (i.e., has a low oxygen transmission rate). This finding has led to the completion of the invention.

### SOLUTION TO PROBLEM

One aspect of the invention provides the following optical element (see (1) to (4)).
(1) An optical element including a resin formed article that is formed of an alicyclic structure-containing polymer, and a layer that is formed of an inorganic compound and provided on the resin formed article, the layer having a film density of 2.3 g/cm³ or more and a thickness of 5 to 500 nm.
(2) The optical element according to (1), wherein the inorganic compound is an inorganic oxide or an inorganic nitride.
(3) The optical element according to (1), wherein the inorganic compound is silicon dioxide.
(4) The optical element according to (1), wherein the layer that is formed of the inorganic compound has an oxygen transmission rate of 10 ml/(m²·day·atm) or less.

### ADVANTAGEOUS EFFECTS OF INVENTION

One aspect of the invention thus provides an optical element that is provided to a vehicle, or used outdoors, and exhibits excellent heat resistance and an excellent gas barrier capability.

### DESCRIPTION OF EMBODIMENTS

Examples of the alicyclic structure-containing polymer that forms the optical element according to one aspect of the invention include (a) a norbornene-based polymer, (b) a monocyclic cycloolefin polymer, (c) a cyclic conjugated diene polymer, (d) a vinyl alicyclic hydrocarbon polymer, hydrogenated products thereof, and the like. Specific examples of these alicyclic structure-containing polymers include those disclosed in WO2002/021517, JP-A-2006-116977, JP-A-2010-077251, and the like.

Among these, the norbornene-based polymer, the cyclic conjugated diene polymer, the vinyl alicyclic hydrocarbon polymer, and hydrogenated products thereof are preferable, the norbornene-based polymer, the vinyl alicyclic hydrocarbon polymer, and hydrogenated products thereof are more preferable, and a hydrogenated product of the norbornene-based polymer (hydrogenated norbornene-based polymer) is particularly preferable.

The molecular weight of the norbornene-based polymer, the monocyclic cycloolefin polymer, or the cyclic conjugated diene polymer is appropriately selected taking account of the intended use. The weight average molecular weight of the norbornene-based polymer, the monocyclic cycloolefin polymer, or the cyclic conjugated diene polymer is normally 5,000 to 500,000, preferably 8,000 to 200,000, and more preferably 10,000 to 100,000. When the weight average molecular weight of the norbornene-based polymer, the monocyclic cycloolefin polymer, or the cyclic conjugated diene is within the above range, the formability of the resulting resin composition and the mechanical strength of the resulting resin mold are highly balanced.

The molecular weight of the vinyl alicyclic hydrocarbon polymer is appropriately selected taking account of the intended use. The weight average molecular weight of the vinyl alicyclic hydrocarbon polymer is normally 10,000 to 300,000, preferably 15,000 to 250,000, and more preferably 20,000 to 200,000. When the weight average molecular weight of the vinyl alicyclic hydrocarbon polymer is within the above range, the formability of the resulting resin composition and the mechanical strength of the resulting resin mold are highly balanced.

The alicyclic structure-containing polymer may have a glass transition temperature of 50 to 200°C. The glass transition temperature of the alicyclic structure-containing polymer is preferably 70 to 170°C, and more preferably 90 to 140°C. When the glass transition temperature of the alicyclic structure-containing polymer is within the above range, the strength and the heat resistance of the resulting formed article and the formability of the resulting resin composition are well balanced.

The norbornene-based polymer (preferable polymer) is described in detail below.

The term "norbomene-based polymer" used herein refers to a polymer that is obtained by polymerizing the norbornene-based monomer (i.e., a monomer that includes a norbornene skeleton). Norbornene-based polymers are roughly classified into a norbornene-based polymer obtained by ring-opening polymerization and a norbornene-based polymer obtained by addition polymerization.

Examples of the norbornene-based polymer obtained by ring-opening polymerization include a ring-opening polymer of the norbornene-based monomer, a ring-opening polymer of the norbornene-based monomer and a monomer that can undergo ring-opening copolymerization with the norbornene-based monomer, hydrogenated products thereof, and the like.

Examples of the norbornene-based polymer obtained by addition polymerization include an addition polymer of the norbornene-based monomer, an addition polymer of the norbornene-based monomer and a monomer that can undergo addition copolymerization with the norbornene-based monomer, and the like. Among these, a hydrogenated ring-opening polymer of the norbornene-based monomer is preferable from the viewpoint of heat resistance, mechanical strength, moisture-proof properties, and the like.

Examples of the norbornene-based monomer include bicyclo[2.2.1]hept-2-ene (trivial name: norbornene) and derivatives thereof (in which the ring is substituted with a substituent), tricyclo[4.3.0^{1,6}.1^{2,5}]deca-3,7-diene (trivial name: dicyclopentadiene) and derivatives thereof, 7,8-benzotricyclo[4.3.0.1^{2,5}]dec-3-ene (trivial name: methanotetrahydrofluorene (also referred to as 1,4-metliano-1,4,4a,9a-tetrahydrofluorene)) and derivatives thereof, tetracyclo[4.4.0.1^{2,5}.1^{7,10}]dodec-3-ene (trivial name: tetracyclododecene) and derivatives thereof, and the like.

Examples of the substituent include an alkyl group, an alkylene group, a vinyl group, an alkoxycarbonyl group, an alkylidene group, and the like. The norbornene-based monomer may be substituted with two or more substituents. Specific examples of a substituted norbornene-based monomer include 8-methoxycarbonyltetracyclo[4.4.0.1^{2,5}.1^{7,10}]dodec-3-ene, 8-methyl-8-methoxycarbonyltetracyclo[4.4.0.1^{2,5}.1^{7,10}]dodec-3-ene, 8-ethylidenetetracyclo[4.4.0.1^{2,5}.1^{7,10}]dodec-3-ene, and the like.

These norbornene-based monomers may be used either alone or in combination.

Examples of the monomer that can undergo ring-opening copolymerization with the norbornene-based monomer include a monocyclic cycloolefin-based monomer such as cyclohexene, cycloheptene, and cyclooctene, and the like.

These monomers that can undergo ring-opening copolymerization with the norbornene-based monomer may be used either alone or in combination. When subjecting the norbornene-based monomer and the monomer that can undergo ring-opening copolymerization with the norbornene-based monomer to ring-opening copolymerization, the norbornene-based monomer and the monomer that can undergo ring-opening copolymerization with the norbornene-based monomer are appropriately selected so that the resulting ring-opening polymer normally includes a structural unit derived from the norbornene-based monomer and a structural unit derived from the monomer that can undergo ring-opening copolymerization with the norbornene-based monomer in a weight ratio of 70:30 to 99:1, preferably 80:20 to 99:1, and more preferably 90:10 to 99:1.

Examples of the monomer that can undergo addition copolymerization with the norbornene-based monomer include an α-olefin having 2 to 20 carbon atoms, such as ethylene, propylene, 1-butene, 1-pentene, and 1-hexene, and derivatives thereof; a cycloolefin such as cyclobutene, cyclopentene, cyclohexene, cyclooctene, and 3a,5,6,7a-tetrahydro-4,7-methano-1H-indene, and derivatives thereof; a non-conjugated diene such as 1,4-hexadiene, 4-methyl-1,4-hexadiene, 5-methyl-1,4-hexadiene, and 1,7-octadiene; and the like. Among these, an α-olefin is preferable, and ethylene is particularly preferable.

These monomers that can undergo addition copolymerization with the norbornene-based monomer may be used either alone or in combination.

When subjecting the norbornene-based monomer and the monomer that can undergo addition copolymerization with the norbornene-based monomer to addition copolymerization, the norbornene-based monomer and the monomer that can undergo addition copolymerization with the norbornene-based monomer are appropriately selected so that the resulting addition polymer normally includes a structural unit derived from the norbornene-based monomer and a structural unit derived from the monomer that can undergo addition copolymerization with the norbornene-based monomer in a weight ratio of 30:70 to 99:1, preferably 50:50 to 97:3, and more preferably 70:30 to 95:5.

A ring-opening polymer of the norbornene-based monomer, or a ring-opening polymer of the norbornene-based monomer and the monomer that can undergo ring-opening copolymerization with the norbornene-based monomer, may be obtained by polymerizing the monomer component in the presence of a known ring-opening polymerization catalyst. Examples of the ring-opening polymerization catalyst include a catalyst that includes a halide of a metal (e.g., ruthenium or osmium), a nitrate or an acetylacetone compound, and a reducing agent, and a catalyst that includes a halide or an acetylacetone compound of a metal (e.g., titanium, zirconium, tungsten, or molybdenum), and an organoaluminum compound.

A hydrogenated ring-opening polymer of the norbornene-based monomer may normally be obtained by adding a known hydrogenation catalyst that includes a transition metal (e.g., nickel or palladium) to a solution of the ring-opening polymer, and hydrogenating the carbon-carbon unsaturated bonds included in the ring-opening polymer.

An addition polymer of the norbornene-based monomer, or an addition polymer of the norbornene-based monomer and the monomer that can undergo addition copolymerization with the norbornene-based monomer, may be obtained by polymerizing the monomer(s) using a known addition polymerization catalyst (e.g., a catalyst that includes a titanium, zirconium, or vanadium compound and an organoaluminum compound).

Various additives that are normally used for a synthetic resin may be added to the alicyclic structure-containing polymer.

Examples of the additives include an antioxidant, a rubbery polymer, an additional resin, a UV absorber, an antistatic agent, a slip agent, an anticlouding agent, a natural oil, a synthetic oil, a plasticizer, an organic or inorganic filler, an antibacterial agent, an odor absorber, a deodorizer, and the like.

It is particularly preferable to add an antioxidant to the alicyclic structure-containing polymer. The antioxidant is noramlly added to the alicyclic structure-containing polymer in a ratio of 0.01 to 5 parts by weight, and preferably 0.01 to 1 part by weight, based on 100 parts by weight of the alicyclic structure-containing polymer.

The antioxidant is not particularly limited. It is preferable to use an antioxidant having a molecular weight of 700 or more. If the amount of the antioxidant is too large, or the molecular weight of the antioxidant is too low, the antioxidant may be eluted from the formed article.

Specific examples of the antioxidant include a phenol-based antioxidant such as octadecyl 3-(3,5-di-t-butyl-4-hydroxyphenyl)propionate, tetrakis[methylene-3-(3',5'-di-t-butyl-4'-hydroxyphenyl)propionate]methane, and pentaerythrityl tetrakis[3-(3,5-di-t-butyl-4-hydroxyphenyl)propionate]; a phosphorus-based antioxidant such as triphenyl phosphite, tris(cyclohexylphenyl) phosphite, and 9,10-dihydro-9-oxa-10-phosphaphenanthrene; a sulfur-based antioxidant such as dimyristyl 3,3'-thiodipropionate, distearyl 3.3'-thiodipropionate, lauryl stearyl 3,3-thiodipropionate, and pentaerythritol tetrakis(β-laurylthiopropionate); and the like. These antioxidants may be used either alone or in combination. Note that it is preferable to use a phenol-based antioxidant.

The term "rubbery polymer" used herein refers to a polymer that has a glass transition temperature of 40°C or less. The term "rubbery polymer" used herein includes a rubber and a thermoplastic elastomer. When a polymer has two or more glass transition temperatures (e.g., block copolymer), such a polymer may be used as the rubbery polymer as long as the lowest glass transition temperature is 40°C or less. The Mooney viscosity (ML1+4, 100°C) of the rubbery polymer is appropriately selected taking account of the intended use. The Mooney viscosity (ML1+4, 100°C) of the rubbery polymer is normally 5 to 300.

Specific examples of the rubbery polymer include an ethylene-α-olefin-based rubber; an ethylene-α-olefin-polyene copolymer rubber; a copolymer of ethylene and an unsaturated carboxylate, such as an ethylene-methyl methacrylate copolymer and an ethylene-butyl acrylate copolymer; a copolymer of ethylene and a fatty acid vinyl ester, such as an ethylene-vinyl acetate copolymer; a polymer of an alkyl acrylate such as ethyl acrylate, butyl acrylate, hexyl acrylate, 2-ethylhexyl acrylate, and lauryl acrylate; a diene-based rubber such as polybutadiene, polyisoprene, a random copolymer of styrene and butadiene or isoprene, an acrylonitrile-butadiene copolymer, a butadiene-isoprene copolymer, a butadiene-alkyl (meth)acrylate copolymer, a butadiene-alkyl (meth)acrylate-acrylonitrile copolymer, and a butadiene-alkyl (meth)acrylate-acrylonitrile-styrene copolymer; a butylene-isoprene copolymer; an aromatic vinyl-conjugated diene-based block copolymer such as a styrene-butadiene block copolymer, a hydrogenated styrene-butadiene block copolymer, a hydrogenated styrene-butadiene random copolymer, a styrene-isoprene block copolymer, and a hydrogenated styrene-isoprene block copolymer; a polybutadiene resin having low crystallinity; an ethylene-propylene elastomer; a styrene-grafted ethylene-propylene elastomer; a thermoplastic polyester elastomer; an ethylene-based ionomer resin; and the like.

The rubbery polymer is added in an appropriate amount taking account of the intended use. When impact resistance and flexibility are required, the rubbery polymer is normally added in a ratio of 0.01 to 100 parts by weight, preferably 0.1 to 70 parts by weight, and more preferably 1 to 50 parts by weight, based on 100 parts by weight of the alicyclic structure-containing polymer.

Examples of the additional resin include low-density polyethylene, high-density polyethylene, linear low-density polyethylene, ultra-low-density polyethylene, an ethylene-ethyl acrylate copolymer, an ethylene-vinyl acetate copolymer, polypropylene, polystyrene, hydrogenated polystyrene, polymethyl methacrylate, polyvinyl chloride, polyvinylidene chloride, polyphenylene sulfide, a polyphenylene ether, a polyamide, a polyester, a polycarbonate, cellulose triacetate, polyetherimide, a polyimide, a polyarylate, a polysulfone, polyethersulfone, and the like.

These additional resins may be used either alone or in combination. The additional resin may be used in an appropriate amount as long as the object of the invention is not impaired.

Examples of the UV absorber and a weathering stabilizer include a hindered amine-based compound such as 2,2,6,6-tetramethyl-4-piperidyl benzoate, bis(2,2,6,6-tetramethyl-4-piperidyl) sebacate, bis(1,2,2,6,6-pentamethyl-4-piperidyl)-2-(3,5-di-t-butyl-4-hydroxybenzyl)-2-n-butyl malonate, and 4-[3-(3,5-di-t-butyl-4-hydroxyphenyl)propionyloxy]-1-[2-[3-(3,5-di-t-butyl-4-hydroxyphenyl)propionyloxy]ethyl]-2,2,6,6-tetramethylpiperidine; a benzotriazole-based compound such as 2-(2-hydroxy-5-methylphenyl)benzotriazole, 2-(3-t-butyl-2-hydroxy-5-methylphenyl)-5-chlorobenzotriazole, 2-(3,5-di-t-butyl-2-hydroxyphenyl)-5-chlorobenzotriazole, and 2-(3,5-di-t-amyl-2-hydroxyphenyl)benzotriazole; a benzoate-based compound such as 2,4-di-t-butylphenyl 3,5-di-t-butyl-4-hydroxybenzoate and hexadecyl 3,5-di-t-butyl-4-hydroxybenzoate; and the like.

These UV absorbers and weathering stabilizers may be used either alone or in combination.

The UV absorber and the weathering stabilizer are normally added in a ratio of 0.001 to 5 parts by weight, and preferably 0.01 to 2 parts by weight, based on 100 parts by weight of the alicyclic structure-containing polymer.

Examples of the antistatic agent include a long-chain alkyl alcohol such as stearyl alcohol and behenyl alcohol; a sodium alkylsulfonate and/or a phosphonium alkylsulfonate; a fatty acid ester such as a glycerol ester of stearic acid: a hydroxylamine-based compound; amorphous carbon; a tin oxide powder; an antimony-containing tin oxide powder; and the like. The antistatic agent is normally used in a ratio of 0.001 to 5 parts by weight based on 100 parts by weight of the alicyclic structure-containing polymer.

The alicyclic structure-containing polymer is normally melt-kneaded at about 200°C to about 400°C optionally together with the desired additive using a twin-screw kneader or the like, and formed in the shape of pellets, granules, or a powder, for example.

A resin formed article that is formed of the alicyclic structure-containing polymer may be obtained by forming a resin composition that includes the alicyclic structure-containing polymer optionally together with the desired additive to have a shape (e.g., plate-like shape, lens-like shape, disc-like shape, film-like shape, sheet-like shape, or prism-like shape) that is mainly suitable for an optical part. Examples of the forming method include a melt molding method such as an injection molding method, an extrusion molding method, and a press molding method; a molding method that utilizes a solution, such as a cast molding method; and the like.

The optical element according to one aspect of the invention is obtained by forming the layer (inorganic film) of the inorganic compound on the resin formed article that is formed of the alicyclic structure-containing polymer, the inorganic film having a density of 2.3 g/cm³ or more and a thickness of 5 to 500 nm. The density of the inorganic film is preferably 2.75 g/cm³ or less from the viewpoint of avoiding a situation in which cracks occur in the resin formed article on which the inorganic film is formed, for example.

The inorganic film may be formed using a known film-forming method such as a vacuum deposition method or a sputtering method. It is preferable to use a sputtering method from the viewpoint of forming an inorganic film that exhibits higher adhesion.

An inorganic film that is formed of the inorganic compound can be stacked on the surface of the resin formed article that is formed of the alicyclic structure-containing polymer by utilizing a sputtering method.

Examples of the inorganic compound include an oxide and a nitride of a metal, an alkali metal, silicon, and the like. These inorganic compounds may be used either alone or in combination.

Specific examples of the inorganic oxide include aluminum oxide, bismuth oxide, cerium oxide, chromium oxide, europium oxide, iron oxide, ruthenium oxide, indium oxide, lanthanum oxide, molybdenum oxide, magnesium oxide, neodymium oxide, lead oxide, praseodymium oxide, samarium oxide, antimony oxide, scandium oxide, tin oxide, titanium oxide, titanium monoxide, dititanium trioxide, tantalum pentoxide, tungsten oxide, yttrium oxide, zirconium oxide, zinc oxide, silicon oxide, silicon monoxide, silicon dioxide, and the like. A mixture of these oxides (e.g., a mixture of indium oxide and tin oxide (ITO)) may also be used. Among these, silicon dioxide is preferable.

Specific examples of the inorganic nitride include silicon nitride, aluminum nitride, indium nitride, tin nitride, copper nitride, iron nitride, magnesium nitride, zinc nitride, titanium nitride, gallium nitride, vanadium nitride, chromium nitride, and the like.

A known sputtering method that is commonly used may be used as the sputtering method. Specific examples of the sputtering method include a plasma sputtering method such as a diode sputtering method, a triode sputtering method, a tetrode sputtering method, and a magnetron sputtering method; a beam sputtering method such as an ion beam sputtering method and an ECR sputtering method; and the like. A DC power supply, an RF power supply, or a microwave power supply may be used as the power supply. It is preferable to use a plasma sputtering method (more preferably a magnetron sputtering method) since the film density can be increased.

The target material used for the sputtering method may be appropriately selected taking account of the type and the intended use of the film, and the like. When forming an oxide film, a metal oxide or silicon oxide (e.g., SiO₂) is normally used as the target, and a magnetron sputtering device that utilizes an AC power supply is normally used as the sputtering device.

A film is formed while introducing oxygen gas or nitrogen gas into the chamber during a sputtering reaction to produce an oxide or a nitride. Oxygen or nitrogen may be introduced into the chamber by introducing an inert gas such as argon gas that contains a given amount of oxygen or nitrogen.

The film density of the layer formed of the inorganic compound that is stacked on the resin formed article may be adjusted to 2.3 g/cm³ or more by appropriately adjusting the sputtering conditions, such as (α) increasing the degree of vacuum, (β) utilizing an auxiliary gas, (γ) adjusting the flow rate of auxiliary gas, or (δ) increasing the amount of high-frequency electric power, or adjusting the vacuum deposition conditions such as effecting vacuum deposition at as high a temperature as possible that is equal to or lower than the glass transition temperature of the alicyclic structure-containing polymer used to form the resin formed article.

For example, when using a high-frequency magnetron sputtering method, the film density can be increased by effecting sputtering at a degree of vacuum of 5×10⁻⁴ to 1.0×10⁻² Torr, an argon gas flow rate of 10 to 40 sccm, an oxygen gas flow rate of 0 to 5 sccm, and a high-frequency electric power of 100 to 500 W.

A single-layer film may be formed using the above method. Note that it is preferable to stack two or more films that differ in composition (component), and it is more preferable to alternately stack films that differ in refractive index in order to obtain a film that exhibits excellent optical performance. In such a case, about 10 to 20 films may be stacked.

The average thickness of the sputtered films obtained using the above method is 5 to 500 nm, and preferably 5 to 50 nm.

The resulting laminate (optical element) yellows to only a small extent in a high-temperature environment (i.e., exhibits excellent heat resistance), and exhibits an excellent gas barrier capability (i.e., has a low oxygen transmission rate).

Specifically, when the optical element according to one aspect of the invention is allowed to stand in an oven at 125°C for 500 hours, and the color difference (ΔYI) between the optical element before being allowed to stand in the oven and the optical element after being allowed to stand in the oven is determined using a known spectral color difference meter, the color difference (ΔYI) is 0.1 to 5, and preferably 0.1 to 3 (i.e., the optical element exhibits excellent heat resistance).

When a film obtained by stacking an inorganic film on the surface of the (film-like) optical element according to one aspect of the invention is allowed to stand at a temperature of 23°C and a relative humidity of 65%, and the oxygen transmission rate (ml/(m²·day·atm)) of the film per m² is measured using a known oxygen transmission rate measurement device, the oxygen transmission rate (ml/(m²·day·atm)) is preferably 10 ml/(m²·day·atm) or less, more preferably 7 ml/(m²·day·atm) or less, and still more preferably 3 ml/m²·day·atm) or less (i.e., the optical element exhibits an excellent gas barrier capability).

The optical element according to one aspect of the invention that exhibits the above properties may suitably be used as an optical element such as an antireflective film, a reflective film, a wavelength-selective transmission film, a transparent conductive film, and a polarizing film. The optical element (laminate) may be used as an optical part such as a lens, a prism, an optical disc, an optical filter, a beam splitter, a mirror, a light guide plate, a touch panel, and a liquid crystal substrate.

The optical element is particularly preferably used as an in-vehicle optical element that is provided to a vehicle and used for monitoring or sensing (e.g., rear view monitor, around view monitor, front-side monitor, electronic mirror, night view, pre-crash safety system, cruise control system, lane keeping assistance system, driver drowsiness detection system, and sign recognition system); and an outdoor optical element that is installed outdoors and used as an image recognition optical element (e.g., security camera and intercom).

### EXAMPLES

The invention is further described below by way of examples and comparative examples. Note that the invention is not limited to the following examples. The units "parts" and "%" used in connection with the examples and the comparative examples respectively refer to "parts by weight" and "wt%" unless otherwise indicated.

The evaluation methods used in connection with the examples are described below.

### Film thickness and density

The thickness and the density of the inorganic film were determined by subjecting a substrate (optical element) obtained by stacking the inorganic film on the surface of a resin formed article formed of the alicyclic structure-containing polymer to X-ray reflectivity measurement (XRR measurement) using a high-resolution X-ray diffractometer ("D8 Discover" manufactured by Bruker Corporation).

### Oxygen transmission rate

A film having an area of 50 cm² (i.e., a film obtained by stacking an inorganic film on the surface of a resin film formed of the alicyclic structure-containing polymer) was allowed to stand at a temperature of 23°C and a relative humidity of 65%, and the oxygen transmission rate (ml/(m²·day·atm)) of the film per m² was measured using an oxygen transmission rate measurement device ("OX-TRAN 2/21MH" manufactured by MOCON, Inc.).

### Evaluation of heat resistance

A substrate (optical element) obtained by stacking the inorganic film on the surface of a resin formed article formed of the alicyclic structure-containing polymer was allowed to stand in an oven at 125°C for 500 hours, and the color difference (ΔYI) between the substrate before being allowed to stand in the oven and the substrate after being allowed to stand in the oven was determined using a spectral color difference meter ("SE-2000" manufactured by Nippon Denshoku Industries Co., Ltd.) to evaluate the heat resistance of the substrate. The presence or absence of cracks in the inorganic film and the resin formed article was also determined by naked-eye observation.

### Production Example 1: Production of resin formed article

A resin formed article was produced using a hydrogenated norbornene-based ring-opening polymer ("ZEONEX (registered trademark) F52R" manufactured by Zeon Corporation) (alicyclic structure-containing polymer). The resin formed article was formed (molded) using an injection molding device ("ROBOSHOT (registered trademark) α100B" manufactured by FANUC Corporation) to obtain a sheet having a thickness of 3 mm, a length of 65 mm, and a width of 65 mm. The mold temperature was set to 140°C, and the cylinder temperature was set to 280°C.

### Example 1

A multilayer substrate was obtained in the same manner as in Example 1, except that the sputtering time was changed to 2.5 minutes. The resulting sputtered film had a thickness of 31 nm, a film density of 2.32 g/cm³, and an oxygen transmission rate of 2.26 ml/(m²·day·atm). The ΔYI of the resulting multilayer substrate was 0.2, and the ΔYI of the multilayer substrate after being allowed to stand at 125°C for 500 hours was 2.1. No cracks were observed in the inorganic film and the resin formed article.

### Example 4 2

A multilayer substrate was obtained in the same manner as in Example 1, except that the sputtering time was changed to 1 minute. The resulting sputtered film had a thickness of 12 nm, a film density of 2.30 g/cm³, and an oxygen transmission rate of 2.63 ml/(m²·day·atm). The ΔYI of the resulting multilayer substrate was 0.2, and the ΔYI of the multilayer substrate after being allowed to stand at 125°C for 500 hours was 2.3. No cracks were observed in the inorganic film and the resin formed article.

### Example 3

A multilayer substrate was obtained in the same manner as in Example 1, except that the sputtering time was changed to 30 seconds. The resulting sputtered film had a thickness of 6 nm, a film density of 2.31 g/cm³, and an oxygen transmission rate of 6.33 ml/(m²·day·atm). The ΔYI of the resulting multilayer substrate was 0.2, and the ΔYI of the multilayer substrate after being allowed to stand at 125°C for 500 hours was 2.9. No cracks were observed in the inorganic film and the resin formed article.

### Comparative Example 1

The resin formed article obtained in Production Example 1 was allowed to stand at 125°C for 500 hours, and the ΔYI of the substrate was measured and found to be 23.7. No cracks were observed in the inorganic film and the resin formed article.

### Comparative Example 2

A multilayer substrate was obtained in the same manner as in Example 1, except that the sputtering time was changed to 20 seconds. The resulting sputtered film had a thickness of 4 nm, a film density of 2.30 g/cm³, and an oxygen transmission rate of 18.6 ml/(m²·day·atm). The ΔYI of the resulting multilayer substrate was 0.2, and the ΔYI of the multilayer substrate after being allowed to stand at 125°C for 500 hours was 6.9. No cracks were observed in the inorganic film and the resin formed article.

### Comparative Example 3

A silicon oxide layer was formed on the surface of the resin formed article obtained in Production Example 1 using a vacuum deposition method. The silicon oxide layer was formed using a high-frequency induction heating deposition device. After securing the film on the cooling base set at 40°C, the vacuum vessel was evacuated to 5×10⁻³ Pa. Silicon oxide in the crucible was sublimed by induction heating, and the gate was opened at 2×10⁻² Pa to form a film for 30 seconds to obtain a silica film having a thickness of 50 nm. The resulting film had a film density of 2.21 g/cm³ and an oxygen transmission rate of 35.2 ml/(m²·day·atm). The ΔYI of the resulting multilayer substrate was 0.2, and the ΔYI of the multilayer substrate after being allowed to stand at 125°C for 500 hours was 18.7. Cracks were observed in the silica film.

As is clear from the above results, the optical elements (Examples 1 to 3) obtained by forming a silicon oxide film having a thickness of 5 nm or more and a film density of 2.3 g/cm³ or more on the resin formed article showed a reduced change in hue at a high temperature.

On the other hand, when an inorganic film was not stacked on the resin formed article (Comparative Example 1), or when the thickness of the inorganic film was as thin as 4 nm (Comparative Example 2), the multilayer substrate (optical element) yellowed to a large extent at a high temperature. When the film density was less than 2.3 g/cm³, the color difference (ΔYI) increased, and cracks occurred in the inorganic film (Comparative Example 3).

## Claims

1. A method for producing an optical element comprising a resin formed article that is formed of an alicyclic structure-containing polymer, and a layer that is formed of an inorganic compound and provided on the resin formed article by a high-frequency magnetron sputtering method with a high-frequency electric power of 100 to 500 W, the layer having a film density of 2.3 g/cm³ or more and a thickness of 5 to 50 nm, wherein the thickness and the density are measured by the method given in the description

2. The method for producing an optical element according to claim 1, wherein the inorganic compound is an inorganic oxide or an inorganic nitride.

3. The method for producing an optical element according to claim 1, wherein the inorganic compound is silicon dioxide.

4. The method for producing an optical element according to claim 1, wherein the layer that is formed of the inorganic compound has an oxygen transmission rate of 10 ml/(m²·day·atm) or less, wherein the oxygen transmission rate is measured by the method given in the description.

5. The method for producing an optical element according to claim 1, wherein the layer that is formed of the inorganic compound is formed while introducing an argon gas with a flow rate of 10 to 40 sccm into the chamber during a sputtering reaction.

6. The method for producing an optical element according to claim 5, further oxygen gas with a flow rate of 0 to 5 sccm being introduced.

7. The method for producing an optical element according to claim 1, wherein the alicyclic-structure-containing polymer is a hydrogenated ring-opening polymer of a norbornene-based monomer.

## Patentansprüche

1. Ein Verfahren zur Herstellung eines optischen Elements, umfassend einen aus Kunststoff geformten Gegenstand der aus einem Polymer enthaltend eine alizyklische Struktur gebildet ist, sowie eine Schicht die aus einer anorganischen Verbindung gebildet ist und auf dem aus Kunststoff geformten Gegenstand bereitgestellt wird mittels eines Hochfrequenz-Magnetron Sputterverfahrens mit einer hochfrequenten elektrischen Leistung von 100 bis 500 W, wobei die Schicht eine Film-Dichte von 2,3 g/cm³ oder mehr und eine Dicke von 5 bis 50 nm aufweist, wobei die Dicke und die Dichte gemessen werden nach den Verfahren wie in der Beschreibung angegeben.

2. Das Verfahren zur Herstellung eines optischen Elements gemäß Anspruch 1, wobei die anorganische Verbindung ein anorganisches Oxid oder ein anorganisches Nitrid ist.

3. Das Verfahren zur Herstellung eines optischen Elements gemäß Anspruch 1, wobei die anorganische Verbindung Siliziumdioxid ist.

4. Das Verfahren zur Herstellung eines optischen Elements gemäß Anspruch 1, wobei die Schicht welche aus der anorganischen Verbindung gebildet wird eine Sauerstofftransmissionsrate von 10 ml/(m²·Tag·atm) oder weniger aufweist, wobei die Sauerstofftransmissionsrate nach dem in der Beschreibung angegebenen Verfahren gemessen wird.

5. Das Verfahren zur Herstellung eines optischen Elements gemäß Anspruch 1, wobei die aus der anorganischen Verbindung erzeugte Schicht gebildet wird während ein Argongas mit einer Fließgeschwindigkeit von 10-40 sccm während der Sputterreaktion in die Kammer eingebracht wird.

6. Das Verfahren zur Herstellung eines optischen Elements gemäß Anspruch 5, wobei weiterhin Sauerstoffgas mit einer Fließgeschwindigkeit von 0 bis 5 sccm eingeführt wird.

7. Das Verfahren zur Herstellung eines optischen Elements gemäß Anspruch 1, wobei das Polymer enthaltend die alizyklische Struktur ein hydriertes Ringöffnungspolymer eines Norbornen-basierten Monomers ist.

## Revendications

1. Procédé pour produire un élément optique comprenant un article formé de résine, qui est formé par un polymère contenant une structure alicyclique, et une couche qui est formée par un composé inorganique et disposée sur l'article formé de résine par un procédé de pulvérisation cathodique au magnétron à haute fréquence avec une puissance électrique à haute fréquence comprise entre 100 et 500 W, la couche ayant une densité de film de 2,3 g/cm3 ou plus et une épaisseur comprise entre 5 et 50 nm, dans lequel l'épaisseur et la densité sont mesurées par le procédé donné dans la description.

2. Procédé pour produire un élément optique selon la revendication 1, dans lequel le composé inorganique est un oxyde inorganique ou un nitrure inorganique.

3. Procédé pour produire un élément optique selon la revendication 1, dans lequel le composé inorganique est du dioxyde de silicium.

4. Procédé pour produire un élément optique selon la revendication 1, dans lequel la couche qui est formée par le composé inorganique a un taux de transmission de l'oxygène de 10 ml/(m2·jour·atm) ou moins, le taux de transmission de l'oxygène étant mesuré par le procédé donné dans la description.

5. Procédé pour produire un élément optique selon la revendication 1, dans lequel la couche qui est formée par le composé inorganique est formée tout en introduisant de l'argon gazeux sous un débit d'écoulement compris entre 10 et 40 cm3 standard par minute dans la chambre durant une réaction de pulvérisation cathodique.

6. Procédé pour produire un élément optique selon la revendication 5, de l'oxygène gazeux sous un débit d'écoulement compris entre 0 et 5 cm3 standard par minute étant de plus introduit.

7. Procédé pour produire un élément optique selon la revendication 1, dans lequel le polymère contenant une structure alicyclique est un polymère hydrogéné obtenu par ouverture de cycle d'un monomère à base de norbornène.
